# EUROPÄISCHE PATENTSCHRIFT

(11) **EP 2 113 625 B1**
(45) Veröffentlichungstag und Bekanntmachung des Hinweises auf die Patenterteilung: **11.03.2015**
(21) Anmeldenummer: 09158806.1
(22) Anmeldetag: 27.04.2009
(51) Int. Cl.: E06B 3/263, E06B 3/30

(54) **Niedrigenergiefenster**
Low energy window
Fenêtre basse énergie

(30) Priorität: 30.04.2008 AT 25308 U
(43) Veröffentlichungstag der Anmeldung: 04.11.2009
(73) Patentinhaber: Fosodeder, Hubert, 4673 Gaspoldshofen (AT)
(72) Erfinder: Fosodeder, Hubert, 4673 Gaspoldshofen (AT)
(74) Vertreter: Staudt, Armin Walter

(56) Entgegenhaltungen:
- EP-A2- 1 070 820
- DE-C2- 19 736 860

## Beschreibung

Die vorliegende Erfindung betrifft einen Stockrahmen und/oder Flügelrahmen für Niedrigenergiefenster bzw. Passivhausfenster und artverwandte Vorrichtungen mit Verglasung, mit einem Stockrahmen, der einen Stützrahmen und einen Blendrahmen und eine zwischen Stützrahmen und Blendrahmen angeordnete Dämmung umfasst, und mit einem Flügelrahmen, der ebenfalls einen Stützrahmen und einen Blendrahmen umfasst.
Im weiteren Verlauf wird zur Vereinfachung nur noch auf Fenster Bezug genommen, die Ausführungen beziehen sich ausdrücklich aber auch auf Türen, Wintergartenelemente und ähnliche Vorrichtungen mit Verglasung. Die Begriffe Niedrigenergiefenster und Passivhausfenster sind allseits bekannt und beschreiben eine besonders energieeffiziente Ausführung.

### Stand der Technik

Um solche energieeffizienten Ausführungen herzustellen, ist es seit langem bekannt, den Stockrahmen und den Flügelrahmen der Fenster mehrteilig auszuführen. Der Stockrahmen und der Flügelrahmen bestehen jeweils aus einem Stützrahmen und einem äußeren, der Witterung ausgesetzten Blendrahmen, wobei zwischen dem Stützrahmen und dem Blendrahmen eine Dämmung angeordnet ist. Der Blendrahmen kann dabei aus demselben Material wie der Stützrahmen, beispielsweise aus Holz gefertigt sein. Es ist aber auch bekannt, den Blendrahmen aus witterungsbeständigem Material, etwa aus Kunststoffprofilen oder aus Metallprofilen zu fertigen.

Für die Verwendung als Niedrigenergiefenster oder Passivhausfenster spielt die zwischen dem Stützrahmen und dem Blendrahmen angeordnete Dämmung eine entscheidende Rolle. Sie besteht üblicherweise aus einem geschäumten Kunststoff, welcher aus handelsüblichen Kunststoffplatten entsprechend zugeschnitten und gefräst und dann zwischen dem Stützrahmen und dem Blendrahmen befestigt wird.

Diese Bauart ist in der EP 1 070 820 erwähnt, die ein Fenster mit demontierbarer Rahmenblende und eine zwischen dem Blendrahmen und dem Stützrahmen klemmend gehaltene Dämmung aufweist. Dabei stützt sich der Blendrahmen auf einer Mehrzahl von im Abstand zueinander angeordneten Rahmenstelzen ab, welche die Dämmung durchgreifen und auf dem Stützrahmen sitzen. Diese Stelzen sind aus nicht oder kaum verformbarem Kunststoff, aus Metall oder aus Holz gefertigt. Aus Kostengründen sind hierfür in der Praxis bevorzugt Spritzgussteile aus Kunststoff in Verwendung.

Blendenseitig sind auf den Rahmenstelzen Drehverbinder zur Montage der Blendrahmen angeordnet, wobei die Drehverbinder und die Rahmenstelzen mit einem gemeinsamen Befestigungselement, insbesondere einer Schraube am Stützrahmen befestigt sind. Der Ort der Befestigung ist vorgegeben. Der Dämmstoff weist entsprechende Stufenbohrungen für das Durchgreifen der T-förmigen Stelzen auf. Die Dämmung wird zur Montage des Fensters auf den Stützrahmen gelegt, dann die Stelzen durch die Ausnehmungen geschoben und auf dem Stützrahmen gemeinsam mit dem Drehverbinder über das Befestigungselement am Stützrahmen befestigt, wobei sich die Stelzen am Stützrahmen und die Drehverbinder an den Stelzen abstützen. Anschließend wird der Blendrahmen mittels der Drehverbinder über die Rahmenstelzen am Stützrahmen gehalten.

Diese Ausführung weist jedoch entscheidende Nachteile auf. So sind für die Befestigung des Blendrahmens eine Vielzahl von Stelzen erforderlich. Diese stellen einen zusätzlichen Bauteil dar. Ohne diese Stelzen würde der Dämmstoff aber bei der Montage der Drehverbinder gequetscht werden, was sich negativ auf die Qualität, die Weiterverarbeitung und die Dämmeigenschaften auswirken würde. Zudem wäre ohne den Stelzen keine statische Kraftableitung zum Stützrahmen vorhanden. Die Stelzen der EP 1 070 820 haben auch die Aufgabe, der Rahmenblende eine ausreichende Lagestabilität zu verleihen, damit gegebenenfalls auch eine Verglasung durch die Blende gehalten werden kann. Diese Lagestabilität muss jedoch durch zusätzliche Stabilisatoren unterstützt werden.

Weiters von Nachteil ist, dass die Befestigungspunkte der Stelzen sehr genau eingehalten werden müssen und die Ausnehmungen der Dämmung sehr passgenau und verformungsfrei an diese Stelzen angepasst sein müssen. Bereits minimale Abweichungen, beispielsweise von nur einem Millimeter, führen unweigerlich zur Ausbildung eines Luftspalts, der zu einer Kältebrücke führt. Dieser Nachteil erfordert große Sorgfalt bei der Montage, wodurch ein hoher Montageaufwand entsteht.

Um diese Nachteile zu vermeiden beschreibt die DE 101 11 022 ein hochwärmegedämmtes Fenster, bei dem unter anderem blendenseitig auf der Dämmung eine Festigkeitsschicht aufliegt, um die Pressung zwischen Drehhalter und Dämmstoffkörper großflächig zu verteilen und zusätzliche Lastabtragungseinrichtungen vorgesehen sind, welche die Lastabtragung zum Stützrahmen hin durchführen, analog zu den Stelzen aus der EP 1 070 820. Bei dieser Lösung sind gleich zwei zusätzliche Bauteile, nämlich die Festigkeitsschicht und die Lastabtragungseinrichtungen, erforderlich.

Bei jüngeren Entwicklungen besteht die Dämmung aus zwei Plattenelementen aus einem härteren und einem weicheren Dämmstoff, die vollflächig miteinander verklebt sind, wobei sich das Befestigungselement auf dem härteren Dämmstoff abstützt. Hierbei sind jedoch große Mengen an härterem Dämmstoffmaterial erforderlich. Das härtere Dämmstoffmaterial ist jedoch erheblich teurer als der weichere Dämmstoff, wodurch die Herstellungskosten des Fensters höher ausfallen. Der härtere Dämmstoff weist zudem schlechtere Dämmeigenschaften auf und führt bei seiner Bearbeitung zu einem schnelleren Werkzeugverschleiß.

### Technische Aufgabenstellung

Die vorliegende Erfindung stellt sich daher die Aufgabe, diese Nachteile zu vermeiden und ein Fenster oder eine artverwandte Vorrichtung bereitzustellen, welches den Anforderungen von Niedrigenergie- oder Passivhaus-Bauweise entspricht, bei gleichzeitig freier Materialwahl für die Fensterelemente.

Diese Aufgabe wird durch einen Stockrahmen mit den Merkmalen des Anspruchs 1 gelöst. Vorteilhafte Weiterbildungen sind Gegenstand der abhängigen Ansprüche.

Der erfindungsgemäße Stockrahmen besteht aus einem Stützrahmen und einem Blendrahmen und einer zwischen Stützrahmen und Blendrahmen angeordneten Dämmung. Die Dämmung ist am Stützrahmen befestigt und der Blendrahmen ist an der Dämmung oder an der Dämmung und am Stützrahmen befestigt. Die Dämmung besteht aus zwei Komponenten, wobei die härtere Komponente eine erheblich höhere Druckfestigkeit aufweist als die weichere Komponente. Zusätzlich schützt die härtere Komponente die weichere Komponente vor eindringender Feuchtigkeit. Diese Schutzfunktion ist insbesondere bei poriger Struktur der weicheren Komponente von eminenter Bedeutung zur Aufrechterhaltung der Dämmqualität der weicheren Komponente.

Die beiden Dämmstoffkomponenten erstrecken sich durchgehend über die gesamte Länge der Dämmung. Die Außenfläche des Stockrahmens wird von der Dämmung vollständig abgedeckt. Die weichere Komponente der Dämmung liegt dabei vollflächig auf dem Stockrahmen auf oder sie weist zur besseren Hinterlüftung des Stockrahmens eingefräste Schlitze auf. Diese Hinterlüftungsschlitze sind insbesondere dann sinnvoll, wenn der Stockrahmen rauminnenseitig aus Holz oder holzähnlichem Werkstoff besteht, um Luftfeuchtigkeit aus dem Innenraum, die durch den Holzrahmen nach außen diffundiert, ableiten zu können, wodurch an der Kontaktfläche Holz/Dämmstoff die Neigung zur Schimmelbildung unterbunden wird.

Die weichere Komponente wird zumindest an zwei aneinander angrenzenden Außenflächen von der härteren Komponente zumindest teilweise umfasst. Die härtere Komponente besteht aus Kunststoff, bevorzugt aus einem extrudierten Kunststoff und insbesondere bevorzugt aus ABS-Kunststoff mit Zuschlägen. Die weichere Komponente besteht bevorzugt aus einem geschäumten Plattenwerkstoff mit hohem Dämmungsgrad, beispielsweise aus Polyurethan, Polystyrol, Styropor oder aus Materialien mit vergleichbaren Wärmedämmeigenschaften oder aus Kork mit geringerer Dichte.

Die beiden Komponenten der Dämmung werden so gewählt, dass sie einen guten formschlüssigen oder kraftschlüssigen Verbund ermöglichen. Bevorzugt sind sie gut miteinander verklebbar. Um den kraftschlüssigen Verbund zu erleichtern, besitzt die härtere Komponente in einer bevorzugten Ausführungsform einen angeformten Steg, der die weichere Komponente an einer weiteren Außenfläche in geringem Umfang formschlüssig umfasst. Dieser Steg kann auch zur Aufnahme einer losen Dichtung ausgebildet sein, oder er kann anextrudierte Dichtungslippen aufweisen.

Zusätzlich oder alternativ kann an der härteren Komponente der Dämmung ein Steg angeformt sein, der in eine ausgefräste Nut der weicheren Komponente eingreift um die erforderliche kraftschlüssige Verbindung zwischen den beiden Komponenten der Dämmung herzustellen.

Die Dämmung wird abgelängt und auf Gehrung zugeschnitten auf den Stützrahmen aufgebracht und mit Befestigungselementen, beispielsweise Schrauben, daran befestigt, wobei das Befestigungselement die härtere Komponente der Dämmung von Außen durchdringt, anschließend die weichere Komponente durchdringt und in einen Teil des Stützrahmens eindringt. Dabei stützt sich das Befestigungselement mit seiner Auflagefläche auf der härteren Komponente ab.

Nach der Befestigung der Dämmung auf dem Stützrahmen wird der Blendrahmen mittels eines Halters, beispielsweise eines Dreh- oder Clipshalters an der Dämmung befestigt, wobei sich der Halter wiederum auf der druckfesteren härteren Komponente abstützt.

In einer weiteren bevorzugten Ausführungsform wird mit dem Befestigungselement die Dämmung und gleichzeitig der Halter für den Blendrahmen montiert, wobei der Halter mit seiner Auflagefläche wiederum auf der härteren Komponente aufliegt.

Die einzelnen Fensterelemente, wie Stockrahmen, Flügelrahmen, sowie deren Stützrahmen und Blendrahmen können aus Holz, Metall, Kunststoff, oder einer beliebigen Kombination dieser Materialien bestehen. Für den Dämmstoff kommen alle oben genannten Materialien für die beiden Komponenten mit ausreichend guter Dämmungseigenschaft und bevorzugt auch guter Verklebbarkeit in Frage, wobei die härtere Komponente mechanisch hoch belastbar, druckfester als die weichere Komponente und formstabil sein muss.

Als Befestigungselemente kommen alle für die jeweils eingesetzten Materialien gängigen Befestigungsvorrichtungen in Frage. So bietet sich beispielsweise bei Stützrahmen aus Holz eine Holzschraube oder ein Nagel als Befestigungselement an.

Die erfindungsgemäßen Stockrahmen und/oder Flügelrahmen ermöglichen es, dass die Festlegung der Verglasung alleine durch die Haltekraft der Blende bzw. durch zusätzliche Glashalter bewerkstelligt wird. Sie sind zudem bei jedem Aufbau anwendbar, der mit einer Verglasung versehen ist.

Der besondere Vorteil der erfindungsgemäßen Stockrahmen und/oder Flügelrahmen und ihre Anwendung für die Herstellung von Fenster und artverwandten Vorrichtungen ist darin zu sehen, dass keine Stelzen oder stelzenähnliche Bauteile mehr erforderlich sind, wodurch sich die Herstellung erheblich vereinfacht, zugleich die Ausbildungsvielfalt erhöht und zusätzlich auch kostengünstiger ist. Zudem kann die Bildung von Kältebrücken im Bereich der Befestigungselemente mit Sicherheit ausgeschlossen werden. Weitere Vorteile sind, dass die Blende in einfacher Weise austauschbar ist und dass das Fenster sehr leicht in seine Einzelbestandteile zerlegbar ist wodurch ein sehr einfaches Recycling ermöglicht wird.

Zusätzlich schützt die härtere Komponente die weichere Komponente vor eindringender Feuchtigkeit. Diese Schutzfunktion ist insbesondere bei poriger Struktur der weicheren Komponente von eminenter Bedeutung zur Aufrechterhaltung der Dämmqualität der weicheren Komponente

Der Flügelrahmen ist bevorzugt ebenfalls mit einer Dämmung aus einer weicheren Komponente und einer härteren Komponente aufgebaut, wobei der Aufbau im Wesentlichen dem Aufbau der Dämmung am Stockrahmen entspricht. In bestimmten Fällen ist es jedoch ausreichend, lediglich den Bereich zwischen dem Isolierglaselement und dem Blendrahmen mit einem Dämmelement nach dem Stand der Technik zu versehen.

### Ausführungsbeispiel

Die Erfindung wird nachstehend anhand der Figuren erläutert. Darin zeigt:

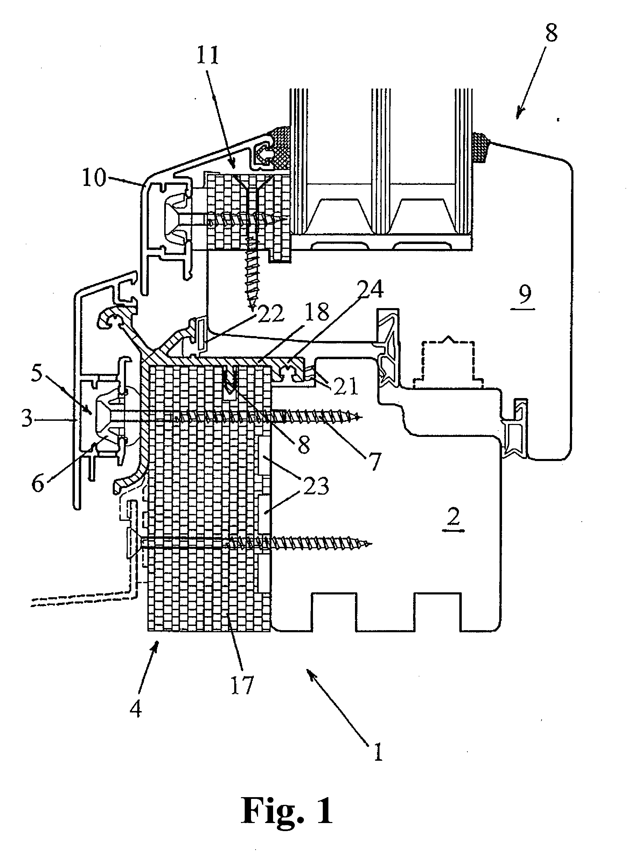

**Fig. 1** einen Schnitt durch den unteren Rahmen eines Niedrigenergiefensters mit gedämmtem Stock nach der vorliegenden Erfindung und mit einer herkömmlichen Dämmung im Bereich des Glasfalzes, mit eingefrästen Hinterlüftungsnuten an der Stockdämmung. Sie steht exemplarisch für alle artverwandten Vorrichtungen mit Verglasung, natürlich auch für fixverglaste Elemente und auch für Niedrigenergiefenster mit nicht gedämmtem Flügelrahmen;

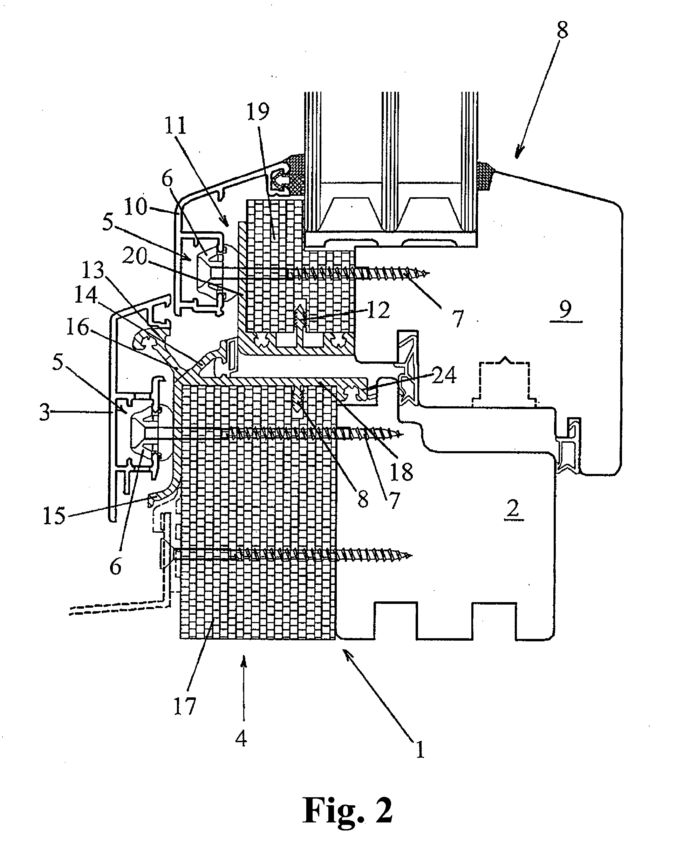

**Fig. 2** einen Schnitt durch den unteren Rahmen eines Niedrigenergiefensters gemäß **Fig. 1**, jedoch ohne eingefrästen Hinterlüftungsschlitzen, wobei neben der Stockdämmung hier auch die Flügeldämmung erfindungsgemäß aus zwei Komponenten besteht.

Der Stockrahmen 1 besteht in beiden Figuren aus dem Stützrahmen 2, dem Blendrahmen 3 und der Dämmung 4, wobei die Dämmung 4 mittels eines Befestigungselementes 5 in der Form einer Schraube 7 oder eines Nagels am Stützrahmen 2 befestigt ist und der Blendrahmen 3 mittels eines Halters 6 und einer Schraube 7 lösbar an der Dämmung 4 befestigt ist. Der Flügelrahmen 8 besteht aus dem Stützrahmen 9, dem Blendrahmen 10 und gegebenenfalls einer Dämmung 11, wobei die Dämmung 11 hier mittels einer Schraube oder einem Nagel am Stützrahmen 9 befestigt ist und der Blendrahmen 10 mittels eines Halters 6 und einer Schraube lösbar an der Dämmung 11 befestigt ist. Die Dämmung 11 ist in **Fig. 1** eine übliche, schraubenfeste Dämmung nach dem Stand der Technik, beispielsweise aus Purenit. Je nach Ausführung des Niedrigenergiefensters kann diese Flügeldämmung jedoch auch gänzlich fehlen.

Die Dämmung 4 besteht aus einem Formteil 17 der weicheren Komponente, welche von einem im wesentlichen L-förmigen, extrudierten Kunststoffprofil 18 aus der härteren Komponente auf zwei Seiten zumindest teilweise umfasst wird und mit einer Schraube 7 oder einem Nagel, welche eine Seite des Kunststoffprofils 18 und den Formteil 17 aus der weicheren Komponente durchdringt, am Stützrahmen 2 befestigt ist. Am Kunststoffprofil 18 können anextrudierte Dichtungen 21, 22 vorgesehen sein. Es ist aber auch denkbar, Dichtungsaufnahmen zum Einziehen von losen Dichtungen vorzusehen. Ebenso ist es denkbar, dass das im wesentlichen Wärmedämmeigenschaften vergleichbaren Materialien oder aus einem Kork geringerer Dichte. Am Kunststoffprofil 18 können anextrudierte Dichtungen 21, 22 vorgesehen sein. Es ist aber auch denkbar, Dichtungsaufnahmen zum Einziehen von losen Dichtungen vorzusehen. Ebenso ist es denkbar, dass das im wesentlichen L-förmige Kunststoffprofil 18 mit einem angeformten Steg 24 eine weitere Seite der weicheren Komponente zumindest geringfügig umfasst.

Nach **Fig. 2** besteht auch die Dämmung 11 aus zwei Komponenten mit unterschiedlicher Druckfestigkeit, einem Formteil 19 der weicheren Komponente, welche von einem im wesentlichen L-förmigen, extrudierten Kunststoffprofil 20 aus der härteren Komponente auf zwei Seiten zumindest teilweise umfasst wird und mit einem Befestigungselement 5, welches eine Seite des Kunststoffprofils 20 und den Formteil 19 aus der weicheren Komponente durchdringt, am Stützrahmen 9 befestigt ist. Auch hier sind Varianten der weicheren Komponente, ebenso wie Varianten der härteren Komponente, wie bei **Fig. 1** erwähnt denkbar.

In einer Variante der Erfindung kann die Dämmung 4, 11 zusätzlich punktuell oder teil- oder vollflächig noch mit einem Klebstoff am Stützrahmen 2, 9 befestigt sein. Die Schraube 7 bzw. der Nagel durchdringt bei den erfindungsgemäßen Ausführungen der Dämmung 4, 11 die härtere Komponente 18, 20 der Dämmung 4, 11, da nur die härtere Komponente 18, 20 eine ausreichende Druckfestigkeit für eine Verschraubung oder Vernagelung aufweist.

Die Dämmungen 4 und 11 weisen hier in einer bevorzugten Ausführung in ihren auf den Stützrahmen 2 und 9 aufliegenden Seiten eine oder mehrere eingefräste Hinterlüftungsnuten 23 bzw. Luftsäcke auf. Diese können vorgesehen sein, um die natürliche Atmungsaktivität des Holzes nicht vollflächig zu unterbinden. Diese Hinterlüftungsnuten 23 sind jedoch nicht zwingend notwendig, beispielsweise wenn die Stützrahmen 2, 9 aus Kunststoff oder aus Metall gefertigt sind.

In einer bevorzugten Ausführung der Erfindung kann die lösbare Befestigung des Halters 6 für den Blendrahmen 3 und die Befestigung der Dämmung 4 am Stützrahmen 2 gleichzeitig mit dem Befestigungselement 5 erfolgen. Ebenso kann in einer bevorzugten Ausführung die lösbare Befestigung des Halters 6 für den Blendrahmen 10 und die Befestigung der Dämmung 11 am Stützrahmen 9 gleichzeitig mit dem Befestigungselement 5 erfolgen.

## Patentansprüche

1. Niedrigenergiefenster mit einem Stockrahmen (1), der einen Stützrahmen (2) und einen Blendrahmen (3) und eine zwischen Stützrahmen (2) und Blendrahmen (3) angeordnete Dämmung (4) umfasst, und mit einem Flügelrahmen (8), der einen Stützrahmen (9) und einen Blendrahmen (10) umfasst, **dadurch gekennzeichnet, dass** die Dämmung (4) zwischen Stützrahmen (2) und Blendrahmen (3) aus zwei formstabilen Komponenten (17, 18) mit unterschiedlicher Druckfestigkeit besteht, dass die weichere Komponente (17) am Stützrahmen (2) aufliegt und an zwei weiteren, aneinander angrenzenden Außenflächen von der härteren Komponente (18) zumindest teilweise umfasst wird und dass die Dämmung (4) mit einem Befestigungselement (5) in der Form einer Schraube (7) oder eines Nagels oder einer Kombination aus Schraube (7) und Blendrahmenhalter (6) am Stützrahmen (2) befestigt ist, wobei sich das Befestigungselement (5) von außen zugänglich durch die härtere Komponente (18) in die weichere Komponente (17) und durch diese hindurch bis in den Stützrahmen (2) erstreckt und wobei sich das Befestigungselement (5) an der härteren Komponente (18) abstützt.

2. Niedrigenergiefenster nach Anspruch 1, **dadurch gekennzeichnet, dass** zwischen dem Stützrahmen (9) und dem Blendrahmen (10 des Flügelrahmens eine weitere Dämmung (11) vorgesehen ist, aus zwei formstabilen Komponenten (19, 20) mit unterschiedlicher Druckfestigkeit besteht, dass die weichere Komponente (19) am Stützrahmen (9) aufliegt und an zwei weiteren, aneinander angrenzenden Außenflächen von der härteren Komponente (20) zumindest teilweise umfasst wird und dass die Dämmung (11) mit einem Befestigungselement (5) in der Form einer Schraube (7) oder eines Nagels oder einer Kombination aus Schraube (7) und Blendrahmenhalter (6) am Stützrahmen (9) befestigt ist, wobei sich das Befestigungselement (5) von außen zugänglich durch die härtere Komponente (20) in die weichere Komponente (19) und durch diese hindurch bis in den Stützrahmen (9) erstreckt und wobei sich das Befestigungselement (5) an der härteren Komponente (20) abstützt.

3. Niedrigenergiefenster nach Anspruch 1 oder 2, **dadurch gekennzeichnet, dass** die beiden Komponenten (17, 18; 19, 20) der Dämmung (4, 11) durch Reibungskräfte und/oder durch Verklebung miteinander verbunden sind.

4. Niedrigenergiefenster nach Anspruch 1 oder 2, **dadurch gekennzeichnet, dass** die Dämmung (4, 11) zusätzlich punktuell oder teil- oder vollflächig mit einem Klebstoff am Stützrahmen (2, 9) befestigt ist.

5. Niedrigenergiefenster nach einem der Ansprüche 1 bis 4, **dadurch gekennzeichnet, dass** die härtere Komponente (18, 20) aus Kunststoff, bevorzugt aus einem extrudierten Kunststoff und insbesondere bevorzugt aus ABS-Kunststoff mit Zuschlägen und die weichere Komponente (17, 19) aus einem Plattenwerkstoffwie beispielsweise aus Polyurethan oder Polystyrol, aus einer Faserplatte oder aus einem Kork geringerer Dichte besteht.

6. Niedrigenergiefenster nach einem der Ansprüche 1 bis 5, **dadurch gekennzeichnet, dass** die härtere Komponente (18, 20) Stege (24) mit angeformten Dichtungsaufnahmen zum Einziehen von losen Dichtungen aufweist und/oder ein oder mehrere Dichtungselemente (21, 22) anextrudiert sind und/oder das Kunststoffprofil einen oder mehrere angeformte Stege (8, 12, 13, 14, 15) besitzt.

7. Niedrigenergiefenster nach einem der vorhergehenden Ansprüche 1 bis 6, **dadurch gekennzeichnet, dass** der Steg (13) mehrere, voneinander beabstandete Durchbrüche (16) besitzt.

8. Niedrigenergiefenster nach einem der Ansprüche 1 bis 7, **dadurch gekennzeichnet, dass** die Dämmungen (4, 11) in ihren auf den Stützrahmen (2, 9) aufliegenden Seiten eine oder mehrere eingefräste Hinterlüftungsnuten (23) aufweisen.

9. Niedrigenergiefenster nach einem der vorhergehenden Ansprüche 1 bis 8, **dadurch gekennzeichnet, dass** der Blendrahmen (3, 10) mittels eines Halters (6), beispielsweise eines Dreh- oder Clipshalters an der Dämmung (4, 11) befestigt wird, wobei sich der Halter (6) auf der härteren Komponente (18, 20) abstützt.

10. Niedrigenergiefenster nach einem der vorhergehenden Ansprüche 1 bis 9, **dadurch gekennzeichnet, dass** mit dem Befestigungselement (5) gleichzeitig der Halter (6) für den Blendrahmen (3, 10) und die Dämmung (4, 11) am Stützrahmen (2, 9) befestigt wird.

## Claims

1. A low-energy window, comprising a story frame (1) which comprises a support frame (2) and a window frame (3) and an insulation unit (4) arranged between the support frame (2) and the window frame (3), and comprising a casement (8) which comprises a support frame (9) and a window frame (10), **characterized in that** the insulation unit (4) between the support frame (2) and the window frame (3) consists of two dimensionally stable components (17, 18) of different compressive strength, the softer component (17) rests on the support frame (2) and is enclosed at least in part by the harder component (18) on two further, mutually adjacent outside surfaces, and the insulation unit (4) is fastened to the support frame (2) by means of a fastening element (5) in form of a screw (7) or a nail or a combination of screw (7) and window frame retainer (6), wherein the fastening element (5) extends in an accessible manner from the outside through the harder component (18) into the softer component (17) and through said component up into the support frame (2), and wherein the fastening element (5) is supported on the harder component (18).

2. A low-energy window according to claim 1, **characterized in that** a further insulation unit (11) is provided between the support frame (9) and the window frame (10) of the casement, which further insulation unit consists of two dimensionally stable components (19, 20) of different compressive strength, the softer component (19) rests on the support frame (9) and is enclosed at least in part by the harder component (20) on two further, mutually adjacent outside surfaces, and the insulation unit (11) is fastened to the support frame (9) by means of a fastening element (5) in form of a screw (7) or a nail or a combination of screw (7) and window frame retainer (6), wherein the fastening element (5) extends in an accessible manner from the outside through the harder component (20) into the softer component (19) and through said component up into the support frame (9), and wherein the fastening element (5) is supported on the harder component (20).

3. A low-energy window according to claim 1 or 2, **characterized in that** the two components (17, 18; 19, 20) of the insulation unit (4, 11) are connected to each other by frictional forces and/or by gluing.

4. A low-energy window according to claim 1 or 2, **characterized in that** the insulation unit (4, 11) is additionally fastened by means of a glue to the support frame (2, 9) in a point-like manner or over a partial or full area.

5. A low-energy window according to one of the claims 1 to 4, **characterized in that** the harder component (18, 20) consists of a synthetic material, preferably an extruded synthetic material and especially preferably of ABS synthetic material with additives, and the softer component (17, 19) consists of a panel-type material such as of polyurethane or polystyrene, a fibreboard or a cork of lower density.

6. A low-energy window according to one of the claims 1 to 5, **characterized in that** the harder component (18, 20) comprises webs (24) with integrally attached seal receptacles for inserting loose seals, and/or one or several sealing elements (21, 22) joined by extrusion, and/or the plastic profile comprises one or several integrally attached webs (8, 12, 13, 14, 15).

7. A low-energy window according to one of the claims 1 to 6, **characterized in that** the web (13) comprises several, mutually spaced breakthroughs (16).

8. A low-energy window according to one of the claims 1 to 7, **characterized in that** the insulation units (4, 11) comprise one or several milled rear-air ventilation grooves (23) in their sides resting on the support frame (2, 9).

9. A low-energy window according to one of the claims 1 to 8, **characterized in that** the window frame (3, 10) is fastened by means of a retainer (6), e.g. a rotary or snap-on retainer, to the insulation unit (4, 11), wherein the retainer (6) rests on the harder component (18, 20).

10. A low-energy window according to one of the claims 1 to 9, **characterized in that** the retainer (6) for the window frame (3, 10) and the insulation unit (4, 11) is fastened to the support frame (2, 9) simultaneously with the fastening element (5).

## Revendications

1. Fenêtre à basse énergie avec un châssis de dormant (1), qui comprend un cadre de support (2) et un faux cadre (3) et une isolation (4) disposée entre le cadre de support (2) et le faux cadre (3), et avec un châssis de battant (8) qui comprend un cadre de support (9) et un faux cadre (10), **caractérisée en ce que** l'isolation (4) entre le cadre de support (2) et le faux cadre (3) se compose de deux composants (17, 18) de forme stable ayant une résistance différente à la compression, **en ce que** le composant le plus mou (17) repose sur le cadre de support (2) et est entouré au moins partiellement sur deux autres surfaces extérieures contiguës par le composant le plus dur (18) et **en ce que** l'isolation (4) est fixée sur le cadre de support (2) avec un élément de fixation (5) prenant la forme d'une vis (7) ou d'un clou ou d'une combinaison de vis (7) et de monture de faux cadre (6), l'élément de fixation (5) s'étendant en étant accessible de l'extérieur à travers le composant le plus dur (18) dans le composant le plus mou (17) et, à travers celui-ci, jusque dans le cadre de support (2), et l'élément de fixation (5) s'appuyant sur le composant le plus dur (18).

2. Fenêtre à basse énergie selon la revendication 1, **caractérisée en ce qu'**il est prévu entre le cadre de support (9) et le faux cadre (10) du châssis de battant une autre isolation (11) qui se compose de deux composants (19, 20) de forme stable ayant une résistance différente à la compression, **en ce que** le composant le plus mou (19) repose sur le cadre de support (9) et est entouré au moins partiellement sur deux autres surfaces extérieures contiguës par le composant le plus dur (20) et **en ce que** l'isolation (11) est fixée au cadre de support (9) avec un élément de fixation (5) prenant la forme d'une vis (7) ou d'un clou ou d'une combinaison de vis (7) et de monture de faux cadre (6), l'élément de fixation (5) s'étendant, en étant accessible de l'extérieur, à travers le composant le plus dur (20) dans le composant le plus mou (19) et, à travers celui-ci, jusque dans le cadre de support (9), et l'élément de fixation (5) s'appuyant sur le composant le plus dur (20).

3. Fenêtre à basse énergie selon la revendication 1 ou 2, **caractérisée en ce que** les deux composants (17, 18 ; 19, 20) de l'isolation (4, 11) sont reliés entre eux par des forces de friction et/ou par collage.

4. Fenêtre à basse énergie selon la revendication 1 ou 2, **caractérisée en ce que** l'isolation (4, 11) est en outre fixée par points ou sur une partie ou la totalité de sa surface au cadre de support (2, 9) avec un adhésif.

5. Fenêtre à basse énergie selon l'une des revendications 1 à 4, **caractérisée en ce que** le composant le plus dur (18, 20) se compose de matière plastique, de préférence d'un plastique extrudé et en particulier d'ABS avec des additifs et le composant le plus mou (17, 19) se compose d'un matériau en plaque, par exemple de polyuréthane ou de polystyrène, d'une plaque de fibres ou d'un liège de plus faible densité.

6. Fenêtre à basse énergie selon l'une des revendications 1 à 5, **caractérisée en ce que** le composant le plus dur (18, 20) présente des nervures (24) avec des réceptacles de joint formées pour rentrer les joints relâchés et/ou un ou plusieurs éléments d'étanchéité (21, 22) sont extrudés dessus et/ou le profilé en plastique présente une ou plusieurs nervures (8, 12, 13, 14, 15) formées dessus.

7. Fenêtre à basse énergie selon l'une des revendications 1 à 6, **caractérisée en ce que** la nervure (13) possède plusieurs découpes (16) distantes les unes des autres.

8. Fenêtre à basse énergie selon l'une des revendications 1 à 7, **caractérisée en ce que** les isolations (4, 11) présentent, dans leurs faces reposant sur le cadre de support (2, 9), une ou plusieurs gorges d'aération en face arrière (23) fraisées.

9. Fenêtre à basse énergie selon l'une des revendications 1 à 8, **caractérisée en ce que** le faux cadre (3, 10) est fixé sur l'isolation (4, 11) au moyen d'une fixation (6), par exemple d'une fixation pivotante ou clipsée, laquelle fixation (6) s'appuie sur le composant le plus dur (18, 20).

10. Fenêtre à basse énergie selon l'une des revendications 1 à 9, **caractérisée en ce que** l'élément de fixation (5) fixe à la fois la fixation (6) pour le faux cadre (3, 10) et isolation (4, 11) sur le cadre de support (2, 9).
